# EUROPEAN PATENT APPLICATION

(11) **EP 4 549 397 A1**
(43) Date of publication of application: **07.05.2025**
(21) Application number: 24197490.6
(22) Date of filing: 30.08.2024
(51) Int. Cl.: C01G 53/50

(54) **POSITIVE ELECTRODE ACTIVE MATERIAL FOR SODIUM SECONDARY BATTERY, METHOD OF PREPARING THE SAME, AND SODIUM SECONDARY BATTERY INCLUDING THE SAME**

(30) Priority: 31.10.2023 KR 20230148624
(71) Applicant: ECOPRO BM CO., LTD., Cheongju-si, Chungcheongbuk-do 28117 (KR)
(72) Inventor: PARK, A Ram, 28116 Cheongju-si, Chungcheongbuk-do (KR); LEE, Dongwook, 28116 Cheongju-si, Chungcheongbuk-do (KR); JUNG, Kuhyun, 28116 Cheongju-si, Chungcheongbuk-do (KR); JO, Min Su, 28116 Cheongju-si, Chungcheongbuk-do (KR); SUH, Jun Won, 28116 Cheongju-si, Chungcheongbuk-do (KR)
(74) Representative: Beck & Rössig European Patent Attorneys

(57) **Abstract**

One embodiment of the present invention provides a positive electrode active material for a sodium secondary battery, including P2-type layered oxide particles and O3-type layered oxide particles, wherein in SEM-EDS mapping analysis, an atomic ratio (S3/S2) of a surface Na content (at%) (S3) of the O3-type layered oxide particles to a surface Na content (at%) (S2) of the P2-type layered oxide particles is 0.4 to 1.6.

## Description

### BACKGROUND

### 1. Field of the Invention

The present invention relates to a positive electrode active material for a sodium secondary battery, a method of preparing the same, and a sodium secondary battery including the same.

### 2. Discussion of Related Art

Lithium-ion secondary batteries have been widely used as energy storage devices in various electronic technology fields. Recently, as the demand for lithium-ion secondary batteries has rapidly increased, sodium-ion secondary batteries are attracting attention to replace lithium, an expensive metal. Sodium-ion secondary batteries are one of the next-generation materials with high potential for application to secondary batteries because they have a similar intercalating/deintercalating reaction operating principle as lithium-ion secondary batteries.

The positive electrode active material for sodium-ion secondary batteries is typically a layered transition metal oxide that has a simple structure, excellent electrochemical performance, and is easy to synthesize. In general, O3-type layered oxide has a higher energy density than P2-type layered oxide particles, but has the disadvantage of reducing cycle stability due to greater structural changes during the charge and discharge process, and P2-type layered oxides have relatively excellent cycle stability, but have disadvantages such as relatively low energy density due to low sodium content, making commercial application difficult.

When mixed particles of P2-type oxide particles and O3-type oxide particles are present simultaneously, this provides a relatively high discharge capacity due to the O3-type layered oxide and suppresses the structural change that occurs when a relatively large number of sodium ions come out due to the P2-type layered oxide, so there are attempts to develop products with excellent initial capacity and excellent lifespan characteristics.

However, It is difficult to secure the desired battery performance simply by applying a mixed phase, and in addition, when O3-type oxide particles are washed with water to remove residual Na on the particle surface, all internal Na comes out and it is difficult to improve the problem of not maintaining the structure. From this, it is difficult to solve the problem of deteriorating the lifetime and stability of the battery, such as gas generation due to electrolyte side reactions during battery operation due to sodium by-products in the form of Na₂CO₃ and NaOH on the particle surface, and a decrease in the capacity and output of the positive electrode active material.

### SUMMARY OF THE INVENTION

The present invention is directed to providing a positive electrode active material with excellent initial capacity and excellent lifespan characteristics by using a mixture of P2-type particles and O3-type particles by preparing P2-type particles and O3-type particles separately, mixing them, and then sintering them to induce Na migration from the surface of the O3-type oxide particle to the surface of the P2-type oxide particle.

In addition, the present invention is directed to improving the problem of the particle structure of O3-type particles collapsing and phase transitioning to P3-type particles by controlling a ratio (S3/S2) of a surface Na content (at%) (S3) of the O3-type layered oxide particles to a surface Na content (at%) (S2) of the P2-type layered oxide particles.

In addition, the present invention intends to provide a technology for selectively controlling only the surface Na content while maintaining the total Na equivalents for each of the P2-type particles and O3-type particles.

### [Means to solve the problem]

One embodiment of the present invention provides a positive electrode active material for a sodium secondary battery, including P2-type layered oxide particles and O3-type layered oxide particles, wherein in SEM-EDS (Scanning Electron Microscopy - Energy Dispersive X-ray Spectroscopy) mapping analysis, an atomic ratio (S3/S2) of a surface Na content (at%) (S3) of the O3-type layered oxide particles to a surface Na content (at%) (S2) of the P2-type layered oxide particles is 0.4 to 1.6.

The ratio (S3/S2) of a surface Na content (at%) (S3) of the O3-type layered oxide particles to a surface Na content (at%) (S2) of the P2-type layered oxide particles may be 0.65 to 1.45.

In SEM-EDS mapping analysis, the surface Na content (at%) (S2) of the P2-type layered oxide particles may range from 14.5 to 21.5 at%, and the surface Na content of the O3-type layered oxide particles (at%) (S3) may range from 7.5 to 21.5 at%.

The surface Na content (at%) (S2) of the P2-type layered oxide particles may range from 14.5 to 21.5 at%, and the surface Na content of the O3-type layered oxide particles (at%) (S3) may range from 14.5 to 21.5 at%.

The P2-type layered oxide may be represented by the following Chemical Formula 1, and the O3-type layered oxide may be represented by the following Chemical Formula 2:

[Chemical Formula 1] Naₐ[NiₓM1_{y}Mn_{1-x-y}]O₂

in Chemical Formula 1,
M1 is at least one selected from P, Sr, Ba, Ti, Zr, W, Co, Mg, Al, Cu, Zn, Ce, Hf, Ta, F, Cr, V, Si, Fe, Y, Ga, Sn, Mo, Ge, Nd, B, Nb, and Gd, and
0.44<a<0.80, 0.05≤x≤0.45, 0.05≤y≤0.15, 0.45<1-x-y≤0.9.

[Chemical Formula 2] Naₐ[NiₓM1_{y}M2_{z}Mn_{1-x-y-z}]O₂

in Chemical Formula 2,
M1 is at least one selected from the group consisting of Fe and Mn,
M2 is at least one selected from P, Sr, Ba, Ti, Zr, W, Co, Mg, Al, Cu, Zn, Ce, Hf, Ta, F, Cr, V, Si, Fe, Y, Ga, Sn, Mo, Ge, Nd, B, Nb, and Gd, and
0.80<a<1.1, 0.05≤x≤0.45, 0.05≤y≤0.45, 0.05≤z≤0.15, 0.05<1-x-y-z≤0.45.

The P2-type layered oxide may have an Na equivalent weight (Na/M ratio) of 0.60 to 0.70, and the O3-type layered oxide may have an Na equivalent weight (Na/M ratio) of 0.90 to 1.05.

The P2-type layered oxide particles and the O3-type layered oxide particles may be included in a weight ratio of 8:2 to 2:8.

The positive electrode active material may not exhibit an NiOx peak in XRD analysis.

The positive electrode active material may have a residual Na content (TTS, total sodium) of 500 to 10,000 ppm.

The positive electrode active material may be prepared by mixing the P2-type layered oxide particles and O3-type layered oxide particles and sintering the mixed oxide particles.

Another embodiment of the present invention provides a method of preparing a positive electrode active material for a sodium secondary battery, including mixing P2-type layered oxide particles and O3-type layered oxide particles, and sintering the mixed oxide particles.

Before the sintering, the P2-type layered oxide particles and the O3-type layered oxide particles may not have been washed with water to remove residual Na on the surface.

The P2-type layered oxide particles and the O3-type layered oxide particles may be mixed in a weight ratio of 8:2 to 2:8.

The sintering may be performed at a temperature of 400 to 600 °C for 1 to 16 h.

Another embodiment of the present invention provides a positive electrode for a sodium secondary battery including the positive electrode active material, and a sodium secondary battery including the positive electrode and a negative electrode.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIGS. 1A to 2B show the results of SEM-EDS mapping analysis of the particle surface before and after secondary sintering after mixing the P2-type oxide particles and O3-type oxide particles prepared in Example 1 (FIGS. 1A and 1B) and Example 3 (FIGS. 2A and 2B);
FIG. 3 shows the results of XRD peak analysis before and after sintering (secondary sintering) after mixing the P2-type oxide particles and O3-type oxide particles prepared in Examples 1 to 3;
FIG. 4 includes a graph measuring the residual Na content (TTS) before and after secondary sintering and a graph measuring primary charge capacity (CH), primary discharge capacity (DCH), and initial efficiency (ICE);
FIG. 5 shows the results of XRD peak shift analysis of a positive electrode active material depending on whether secondary sintering was applied at each temperature;
FIG. 6 is a graph showing the analysis of lifetime characteristics of a sodium secondary battery according to whether secondary sintering is applied at each temperature; and
FIG. 7 is a graph measuring the gas generation of a sodium secondary battery according to whether secondary sintering was applied in Example 1.

### DETAILED DESCRIPTION OF EXEMPLARY EMBODIMENTS

Advantages and features of the present invention and methods of achieving the same should become clear from embodiments described in detail below with reference to the accompanying drawings. However, the present invention is not limited to the embodiments disclosed below, but may be embodied in various different forms, the embodiments merely serve to complete the disclosure of the present invention and to fully inform the scope of the invention to those skilled in the art to which the invention pertains, and the present invention is defined only by the scope of the claims.

Unless otherwise defined, all terms (including technical and scientific terms) used in the present specification may be used with meanings commonly understood by those of ordinary skill in the art to which the present invention belongs. Throughout the specification, when a part is said to "include" a component, this means that the part may further include other components rather than excluding other components unless specifically stated to the contrary. A singular expression also includes a plural expression unless the context clearly indicates otherwise.

One embodiment of the present invention provides a positive electrode active material for a sodium secondary battery. The positive electrode active material includes P2-type layered oxide particles and O3-type layered oxide particles.

It is known that P2-type layered oxide has excellent lifespan characteristics due to structural stability, but has the disadvantage of low initial capacity due to low Na content, and O3-type layered oxide has high initial capacity due to high Na content, but has poor structural stability, and has the disadvantage of a low Na migration rate and poor lifespan characteristics due to the somewhat small size of the octahedral site where Na can be located in the structure. In the present invention, it is possible to provide a positive electrode active material that maintains the advantages of each particle and improves the disadvantages by mixing and sintering P2-type and O3-type layered oxide particles.

The positive electrode active material of the present invention is characterized in that an atomic ratio (S3/S2) of a surface Na content (at%) (S3) of the O3-type layered oxide particles to a surface Na content (at%) (S2) of the P2-type layered oxide particles is 0.4 to 1.6 in SEM-EDS mapping analysis.

This structural characteristic is the result of inducing Na migration from the surface of the O3-type oxide particle to the surface of the P2-type oxide particle by preparing P2-type particles and O3-type particles separately, mixing them, and then sintering them. Accordingly, the P2-type particles may replenish particle surface Na lost due to water washing or overall low Na content, and O3-type particles may effectively remove residual Na without structural collapse.

Unlike the present invention, even when the particles are prepared by increasing the total Na equivalents of the P2-type particles and decreasing the total Na equivalents of the O3-type particles, considering that the Na equivalent range for maintaining the P2 phase and O3 phase is limited and that it is difficult to manufacture by selectively controlling only the surface Na content while maintaining the total Na equivalents, it is difficult to control the surface Na content ratio of O3/P2 particles within the range of the present invention. In addition, since O3-type oxide particles have fundamentally low structural stability regardless of the control of the total Na equivalents, when washing with water to remove residual Na, there is a problem in that all internal Na comes out and the structure cannot be maintained, but in the present invention, residual Na in O3-type oxide particles may be effectively removed.

Specifically, the atomic ratio (S3/S2) of a surface Na content (at%) (S3) of the O3-type layered oxide particles to a surface Na content (at%) (S2) of the P2-type layered oxide particles may be preferably 0.65 to 1.45. When the S3/S2 ratio is excessively low, Na migration from O3-type oxide particles to P2-type oxide particles may proceed excessively, causing the particle structure of the O3-type particles to collapse and the O3-type oxide particles to undergo a phase transition to P3-type particles.

In SEM-EDS elemental mapping analysis, the surface Na content (at%) (S2) of the P2-type layered oxide particles may range from 14.5 to 21.5 at%, specifically from 15 to 21 at%, 16 to 20 at%, or 17 at% to 19 at%. In addition, the surface Na content (at%) (S3) of the O3-type layered oxide particles may range from 7.5 to 21.5 at%, specifically from 8 to 21 at%, 14.5 to 21.5 at%, 15 to 21 at%, 16 to 20 at% or 17 to 19 at%. Accordingly, the above-described effect can be further improved.

For both P2- and O3-type layered oxides, when the surface Na content exceeds the design range, the residual Na content may increase proportionally, so there is a risk that electrolyte side reactions and gas generation due to residual Na will increase in the upper limit voltage (~4.3V) range. Conversely, when the surface Na content is below the design range, there may be a problem in that internal Na on the surface of the particle comes out and the crystal structure cannot be maintained.

Meanwhile, the SEM-EDS element mapping analysis may be performed at a voltage intensity of 10 to 20 kV, preferably 15 kV. Depending on the set voltage intensity, the detecting depth (area) and target element may be specified from the particle surface to the inside. In the present invention, EDS element mapping analysis is performed at a voltage intensity in the design range to measure the change in Na atomic % on the surface of P2- and O3-type particles under the same analysis conditions, and at this time, the surface of the particle may change slightly depending on the voltage intensity, and the present invention is not limited to a specific depth (length and area).

The P2-type layered oxide may be represented by the following Chemical Formula 1, and the O3-type layered oxide may be represented by the following Chemical Formula 2:

[Chemical Formula 1] Naₐ[NiₓM1_{y}Mn_{1-x-y}]O₂

in Chemical Formula 1, M1 is at least one selected from P, Sr, Ba, Ti, Zr, W, Co, Mg, Al, Cu, Zn, Ce, Hf, Ta, F, Cr, V, Si, Fe, Y, Ga, Sn, Mo, Ge, Nd, B, Nb, and Gd, and 0.44<a<0.80, 0.05≤x≤0.45, 0.05≤y≤0.15, 0.45<1-x-y≤0.9,

When the P2-type layered oxide has an Na equivalent weight of 0.44 or less (a≤0.44), the oxide has a three-dimensional tunnel structure, and electrochemical properties may deteriorate depending on the arrangement of lattice units. Conversely, when the Na equivalent weight is 0.80 or more (0.80≤a), the oxide has a layered O3 structure, which reduces atmospheric and moisture stability and is sensitive to synthesis conditions such as temperature and atmosphere.

[Chemical Formula 2] Naₐ[NiₓM1_{y}M2_{z}Mn_{1-x-y-z}]O₂

in Chemical Formula 2, M1 is at least one selected from the group consisting of Fe and Mn, M2 is at least one selected from P, Sr, Ba, Ti, Zr, W, Co, Mg, Al, Cu, Zn, Ce, Hf, Ta, F, Cr, V, Si, Fe, Y, Ga, Sn, Mo, Ge, Nd, B, Nb, and Gd, and 0.80<a<1.1, 0.05≤x≤0.45, 0.05≤y≤0.45, 0.05≤z≤0.15,0.05<1-x-y-z≤0.45.

When the O3-type layered oxide has an Na equivalent weight of less than 0.80 (a<0.80), the oxide has a P3-type structure, and electrochemical properties may deteriorate depending on the arrangement of lattice units. Conversely, when the Na equivalent weight is 1.10 or more (0.10≤a), which reduces atmospheric and moisture stability and is sensitive to synthesis conditions such as temperature and atmosphere.

The P2-type layered oxide may have an Na equivalent weight (Na/M ratio) of 0.60 to 0.70, and the O3-type layered oxide may have an Na equivalent weight (Na/M ratio) of 0.90 to 1.05. Accordingly, the above-described effect can be further improved.

The P2-type layered oxide particles and the O3-type layered oxide particles may be included in a weight ratio of 8:2 to 2:8. Specifically, a weight ratio of 8:2 to 4:6, 8:2 to 5:5, or 8:2 to 6:4 is preferred. When the content of O3-type particles is somewhat low, the overall capacity characteristics deteriorate, and conversely, when the content is somewhat high, even when Na migration proceeds, the residual Na content is high, so there is the possibility of forming a thick cathode-electrolyte interface (CEI), reducing ICE, and generating gas. In addition, when the above-mentioned desirable content range is satisfied, an ICE of 90% or more and sufficient capacity characteristics may be secured.

The positive electrode active material may be characterized in that no NiOx peak appears in XRD analysis. For P2-type particles, it is easy for the NiOx crystal phase to be synthesized on the particle surface where Na is lost due to washing with water or due to the overall low Na content, but in the present invention, the P2-type particles surface may be replenished by Na migration by O3-type particles, thereby preventing the synthesis of a crystal phase such as NiOx.

The positive electrode active material of the present invention may reduce the residual Na content (TTS, total sodium) to 500 to 10,000 ppm, specifically to 500 to 9,500ppm, 500 to 9,000ppm, 1,000 to 9,000ppm, or 5,000 to 9,000ppm. Accordingly, gas generation caused by residual Na may be suppressed, and battery lifetime characteristics may be significantly improved.

Meanwhile, the content of the residual Na (TTS, total sodium) may be a value obtained by separately calculating the total amount of only Na among compounds including residual Na (for example, NaOH or Na₂CO₃).

Another embodiment of the present invention provides a method of preparing a positive electrode active material for a sodium secondary battery, including mixing P2-type layered oxide particles and O3-type layered oxide particles, and sintering the mixed oxide particles.

For mixing the particles, the weight ratio as described above may be applied, and the mixing method can be applied without limitation as long as it is a method known in the relevant technical field.

The P2-type layered oxide particles and O3-type layered oxide particles are the same as described above, and may be used without limitation as long as they are each obtained by a preparation method known in the relevant technical field.

Meanwhile, the P2-type layered oxide particles may have been washed with water to remove residual Na on the surface, and the O3-type layered oxide particles may have not been washed with water to remove residual Na on the surface. The P2-type layered oxide has high structural stability and can be washed with water, but the O3-type layered oxide is difficult to wash with water because the structure is highly likely to collapse during water washing.

In addition, it is preferable that both the P2-type layered oxide particles and the O3-type layered oxide particles are not washed with water to remove residual Na on the surface. For this purpose, in the case of P2-type layered oxide particles, to synthesize the P2 structure with low Na equivalents (0.65, 0.60, 0.55, etc.) and replenish deficient Na, in the second post-process sintering, the surface Na migration (Na migrating from high concentration to low concentration) phenomenon of O3-type layered oxide is utilized.

The sintering of the mixed oxide particles may be performed at a temperature of 400 to 1,000 °C for 4 to 16 hours, specifically at a temperature of 500 to 1,000 °C, 600 to 1,000 °C, or 700 to 1,000 °C for 6 to 16 hours, 8 to 16 hours, or 10 to 14 hours in an air atmosphere.

When the sintering temperature or sintering time is below the lower limit, the desired phase may not be sufficiently synthesized, and when it is above the upper limit, Na that entered the lattice may elute back to the surface.

Through the above process, Na migration may proceed from the surface of the O3-type oxide particle to the surface of the P2-type oxide particle, and accordingly, P2-type particles may replenish particle surface Na lost due to water washing or overall low Na content, and O3-type particles may effectively remove residual Na without structural collapse, so battery performance such as capacity characteristics, efficiency characteristics, lifespan characteristics, and the like may be improved.

Another embodiment of the present invention provides a positive electrode for a sodium secondary battery including the positive electrode active material and a sodium secondary battery.

The positive electrode includes a positive electrode current collector and a positive electrode active material layer located on the positive electrode current collector, and the positive electrode active material according to one aspect of the present invention is present in the positive electrode active material layer.

The positive electrode current collector is not particularly limited as long as it does not cause a chemical change in a battery and has conductivity, and for example, stainless steel, aluminum, nickel, titanium, sintered carbon, or aluminum or stainless steel whose surface is treated with carbon, nickel, titanium or silver may be used. In addition, the positive electrode current collector may typically have a thickness of 3 to 500 µm, and fine irregularities may be formed on the surface of the current collector, thereby increasing the adhesion of the positive electrode active material. For example, the positive electrode current collector may be provided in various forms such as a film, a sheet, a foil, a net, a porous body, a foam, a nonwoven body, etc.

In addition, the positive electrode active material layer may be a layer including the above-described positive electrode active material along with a conductive material and a binder.

Here, the conductive material is used to provide conductivity to the electrode, and may be used without particular limitation as long as it has conductivity without causing chemical changes in the positive electrode active material. Non-limiting examples of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative. The conductive material may typically be included in an amount of 1% to 30% by weight based on the total weight of the positive electrode active material layer.

In addition, the binder is a material that serves to improve the adhesion between positive electrode active material particles and the adhesion between the positive active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof. The binder may typically be included in an amount of 1% to 30% by weight based on the total weight of the positive electrode active material layer.

The positive electrode according to one embodiment of the present invention may be manufactured according to a conventional positive electrode manufacturing method for a sodium secondary battery, except for using the positive electrode active material described above. For example, a positive electrode may be manufactured by applying a slurry for forming a positive electrode active material layer including a positive electrode active material and, optionally, a binder and a conductive material on a positive electrode current collector, and then drying and rolling it. According to another example, the positive electrode may be manufactured by casting the slurry for forming the positive electrode active material layer on a separate support and then laminating the film obtained by peeling the positive electrode active material layer from the support on the positive electrode current collector.

Another aspect of the present invention provides an electrochemical device including the above-described positive electrode. Here, an electrochemical device may be, specifically, a battery, a capacitor, and more specifically, a sodium secondary battery.

A sodium secondary battery includes a positive electrode, a negative electrode located opposite the positive electrode, a separator interposed between the positive electrode and the negative electrode, and an electrolyte. In addition, the sodium secondary battery may include a battery container (case) that accommodates an electrode assembly including the positive electrode, the negative electrode, and the separator, and a sealing member that seals the battery container.

At this time, depending on the shape of the battery container (case), the sodium secondary battery may be classified as a can-type lithium secondary battery in which the electrode assembly is built into a metal can and a pouch-type sodium secondary battery in which the electrode assembly is built into a pouch made of a sheet such as an aluminum laminate.

In particular, in the case of a pouch-type sodium secondary battery using a positive electrode including a positive electrode active material according to various embodiments of the present invention, as the possibility of side reactions between the positive electrode active material and the electrolyte is low, there is an advantage in that it is possible to improve stability during storage and/or operation and at the same time reduce gas generation.

Hereinafter, the present invention will be described in detail through examples, but these are intended to illustrate the present invention in more detail, and the scope of the present invention is not limited to the following examples.

### Examples

### (Example 1)

A sodium compound Na₂CO₃ was added to an Ni_{0.35}Mn_{0.65}(OH)₂ precursor in an amount of Na/M = 0.65 equivalents, and sintered at 950 °C in an air atmosphere for 6 h to prepare P2-type layered oxide particles (Na_{0.65}Ni_{0.35}Mn_{0.65}O₂ powder).

A sodium compound Na₂CO₃ was added to an Ni_{0.33}Fe_{0.33}Mn_{0.33}(OH)₂ precursor in an amount of Na/M = 1.05 equivalents, and sintered at 950 °C in an air atmosphere for 12 h to prepare O3-type layered oxide particles (Na_{1.05}Ni_{0.33}Fe_{0.33}Mn_{0.33}O₂ powder).

The prepared P2-type oxide particles and O3-type oxide particles were mixed in a weight ratio of 7:3, and secondary sintering was performed at 800 °C in an air atmosphere for 6 h to prepare a positive electrode active material.

30 g of 96 wt% of the prepared positive electrode active material, 2 wt% of carbon black, and 2 wt% of a PVdF binder were dispersed in N-methyl-2 pyrrolidone (NMP) to prepare a positive electrode slurry. The positive electrode slurry was uniformly applied on an aluminum thin film having a thickness of 15 µm and vacuum dried at 135 °C to manufacture a positive electrode for a sodium secondary battery.

A sodium metal plate was used as a counter electrode to the positive electrode, and a porous polyethylene membrane (Celgard 2300, thickness: 25 µm) was used as a separator, and a sodium secondary battery (coin cell) was manufactured using an electrolyte in which NaPF₆ was present at a concentration of 1.15 M in a solvent in which ethylene carbonate and ethyl methyl carbonate were mixed in a volume ratio of 3:7.

### (Examples 2 and 3)

A positive electrode active material and a sodium secondary battery were manufactured in the same manner as in Example 1 using Na/M = 0.55 equivalents (Example 2) and 0.45 equivalents (Example 3) when preparing P2-type layered oxide particles, except that Na_{0.55}Ni_{0.35}Mn_{0.65}O₂ (Example 2) and Na_{0.45}Ni_{0.35}Mn_{0.65}O₂ (Example 3) particles were prepared, respectively.

### Experimental Examples

### Experimental Example 1: SEM-EDS mapping analysis of positive electrode active material particles

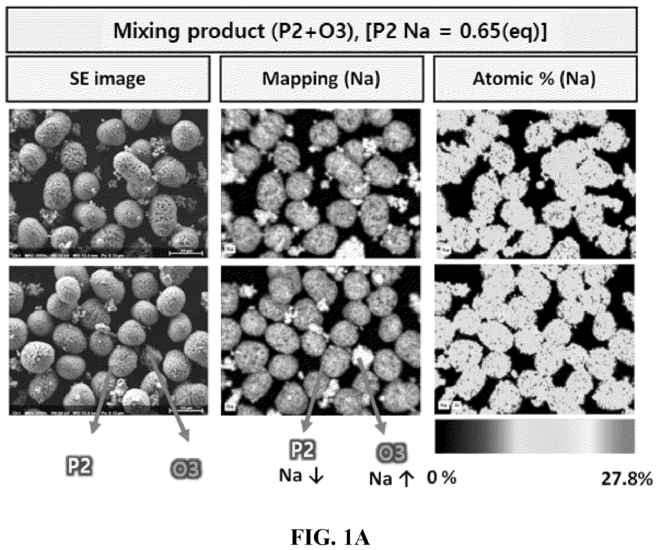

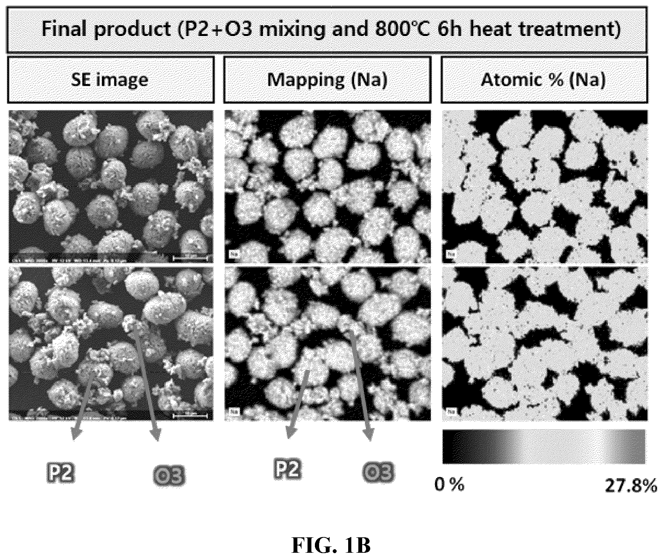

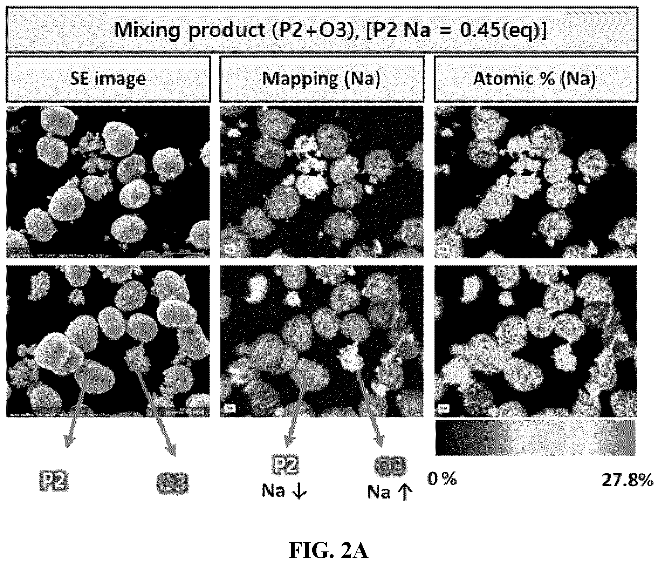

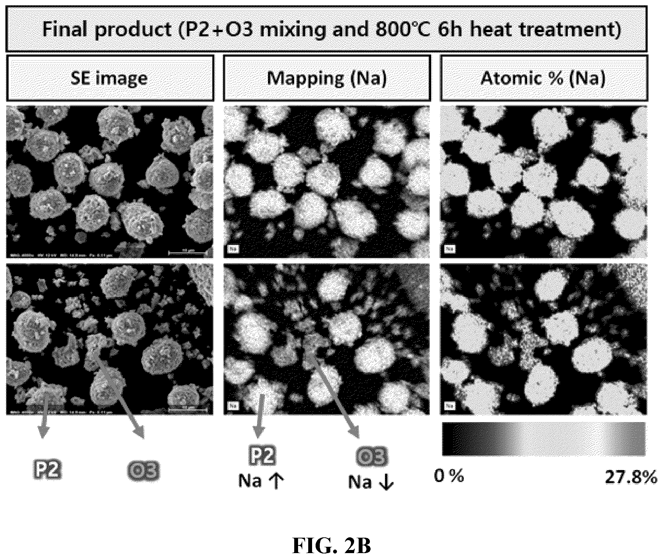

After mixing the P2-type oxide particles and O3-type oxide particles prepared in Examples 1 and 3, SEM-EDS mapping analysis of the particle surface before and after secondary sintering was performed at a voltage intensity of 15 kV.
(Example 1) Before/after secondary sintering: FIG. 1A/FIG. 1B
(Example 3) Before/after secondary sintering: FIG. 2A/FIG. 2B

**[Table 1]**

| | Example 1 | | | | Example 3 | | |
|---|---|---|---|---|---|---|---|
| | Total Na equivalen ts | Before secondary sintering | After secondary sintering | | Total Na equivale nts | Before secondary sintering | After secondary sintering |
| | | Surface Na content (at%) | | | | Surface Na content (at%) | |
| P2-type particles | 0.65 | 10 to 12 | 15 to 21 | P2-type particles | 0.45 | 5 to 10 | 15 to 20 |
| O3-type particles | 1.05 | 20 to 26 | 15 to 21 | O3-type particles | 1.05 | 20 to 26 | 8 to 14 |
| O3/P2 Na ratio | 1.62 | 1.67 to 2.6 | 0.7 to 1.4 | O3/P2 Na ratio | 2.33 | 2 to 5.2 | 0.4 to 0.93 |

Referring to FIGS. 1A and 1B (Example 1) and FIGS. 2A and 2B (Example 3), the Na migration phenomenon from the surface of O3-type oxide particles to the surface of P2-type oxide particles was confirmed after sintering in Examples 1 and 3, respectively. As the residual Na of O3-type particles migrates to the surface of P2-type particles through secondary sintering, it was confirmed that P2-type particles may replenish particle surface Na lost due to water washing, and O3-type particles may effectively remove residual Na without structural collapse.

Referring to Table 1, in Example 1, the Na content ratio on the surface of the O3-type particle/P2-type particle was reduced from 1.67-2.6 to 0.7-1.4 after sintering, which was reduced from 1.62, which was the Na equivalent ratio of all particles (O3 type particles/entire P2 type particles). Therefore, it was confirmed that P2-type particles improve the problem of low initial capacity due to low Na by replenishing Na on the surface, O3-type particles stably reduce Na on the surface without causing particle surface defects or structural collapse, resulting in lower structural stability than before, and may improve the problem of a low Na migration rate due to the small size of the octahedral site where Na may be located. In addition, electrolyte side reactions and gas generation problems are also improved due to the reduced residual Na.

In Example 3, it was confirmed that Na migration proceeded somewhat excessively after the secondary sintering, and the Na content ratio on the surface of O3-type particles/P2-type particles decreased to a somewhat low range of 0.4 to 0.93. For this reason, the particle structure of O3-type particles may collapse and phase change to the P3 type.

### Experimental Example 2: XRD peak shift analysis

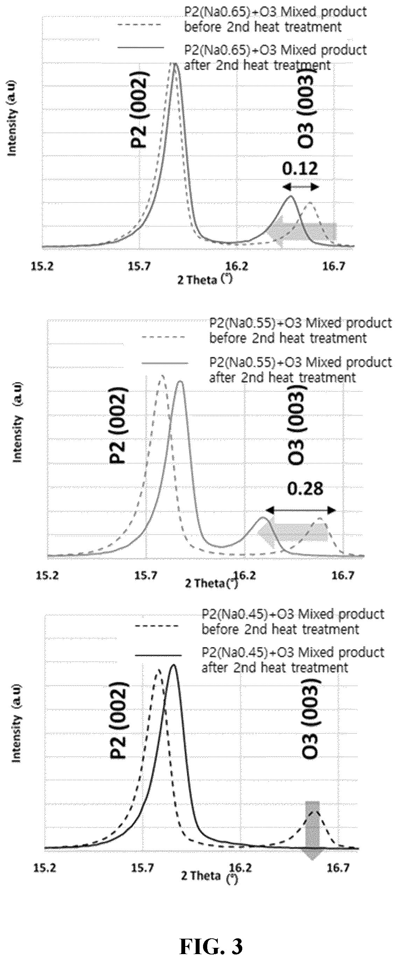

After mixing the P2-type oxide particles and O3-type oxide particles prepared in Examples 1 to 3, XRD peak analysis was performed before and after sintering (secondary sintering), and the results are shown in Table 2 and FIG. 3.

Referring to FIG. 3, the migration phenomenon may be proven from the XRD shift results. Residual Na on the O3 surface enters the P2 structure, causing the P2 (002) peak to move to the right (high angle), and during heat treatment, not only the residual Na of O3 migrates, but also some Na in the O3 lattice migrates, so the (003) peak of the O3 structure moves to the left (low angle). For this reason, the stability of each structure of P2 and O3 may be increased.

From the (002 side) peak shift (increase) of the P2-type particles, it is calculated that an Na/M final equivalent weight of P2 converges to 0.68 to 0.66 in Examples 1 to 3, and from the (003 side) peak shift (decrease) of O3-type particles, it is calculated that the final Na/M equivalent weight of O3 converges to 0.9 to 1.0.

However, the lower the Na equivalents of the P2-type particles, the more Na migration from O3-type particles to P2-type particles tends to increase during sintering after mixing P2/O3 particles, and when P2-type particles contain 0.45 equivalents of Na, Na migration is expected to occur excessively, resulting in structural collapse of O3-type particles.

### Experimental Example 3: Battery performance evaluation according to mixing ratio of P2-type particles and O3-type particles

A positive electrode active material and a sodium secondary battery were manufactured in the same manner as in Example 1, except that the P2-type particles and O3-type particles were prepared at the mixing ratios shown in Table 2 below.

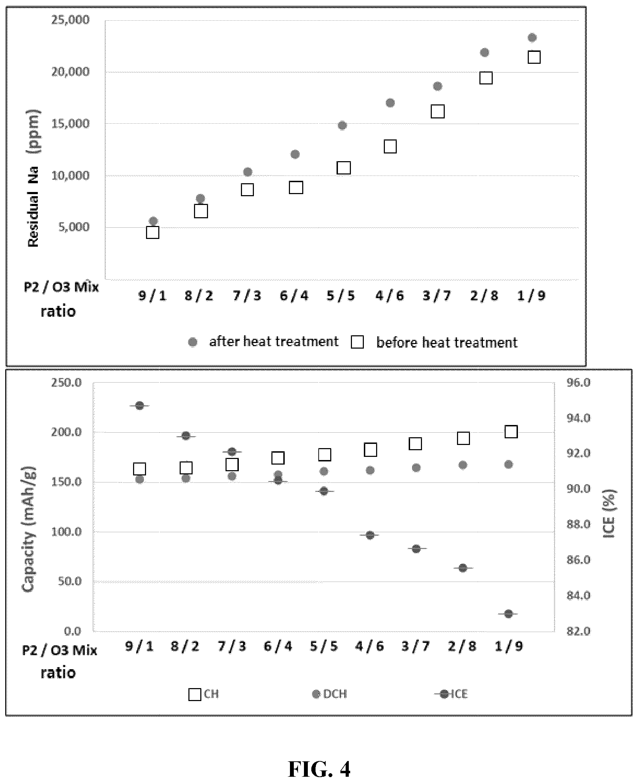

The residual Na content (TTS) before and after secondary sintering was measured, and the primary charge capacity (CH), primary discharge capacity (DCH), and initial efficiency (ICE) of the sodium secondary battery were measured and are shown in Table 2 below and FIG. 4.

### * Measurement of residual Na content (TTS)

The content of residual sodium was measured for each compound (for example, NaOH or Na₂CO₃) including residual Na using a potentiometric neutralization titration method, and then the total amount of only Na was calculated separately to obtain the value (TTS, total sodium).

The calculation method is as shown in Calculation Formula 1 below. TTS (total Na) = NaOH analysis value (%) × Na/NaOH + Na2CO3 analysis value (%) × 2Na/Na2CO3

### * Battery performance evaluation

After charging/discharging once under conditions of 0.1C/0.5C within a driving voltage range of 2.0V to 4.6V at 25 °C, a 1st charge capacity, 1st discharge capacity, and 1st discharge/charge capacity (ICE) were calculated.

**[Table 2]**

| P2/O3 mixing ratio | | Weight ratio | | 9/1 | 8/2 | 7/3 | 6/4 | 5/5 | 4/6 | 3/7 | 2/8 | 1/9 |
|---|---|---|---|---|---|---|---|---|---|---|---|---|
| Residual Na | Before heat treatment | Total | ppm | 5,651 | 7,827 | 10,381 | 12,088 | 14,872 | 17,044 | 18,659 | 21,910 | 23,329 |
| | After heat treatment | Total | ppm | 4,776 | 6,972 | 8,597 | 8,937 | 10,777 | 12,920 | 16,198 | 19,688 | 21,691 |
| Battery evaluation | Initial 1st | CH | mAh/g | 161.7 | 165.8 | 169.3 | 174.5 | 179.0 | 185.4 | 190.2 | 195.4 | 202.5 |
| | | DCH | | 153.1 | 154.2 | 156.0 | 158.0 | 160.9 | 162.1 | 164.8 | 167.2 | 168.1 |
| | | ICE | % | 94.7 | 93.0 | 92.1 | 90.5 | 89.9 | 87.4 | 86.6 | 85.6 | 83.0 |

Referring to Table 2 and FIG. 4, when the content of O3-type particles is less than 20 wt%, the capacity characteristics are poor, and conversely, when the content of O3-type particles is 80 wt% or more, the residual Na content becomes too high, causing problems such as the possibility of forming a thick cathode-electrolyte interface (CEI), reduction of ICE, and possibility of gas generation.

In addition, in order to secure an ICE 90% or more and sufficient capacity characteristics, it may be desirable to design a P2/O3 mixing ratio to be a weight ratio of 8/2 to 6/4.

### Experimental Example 4: Evaluation of XRD peak shift and lifetime characteristics according to secondary sintering temperature change

A positive electrode active material and a sodium secondary battery were manufactured in the same manner as in Example 1, except that the secondary sintering was performed at the temperature shown in Table 3 below.

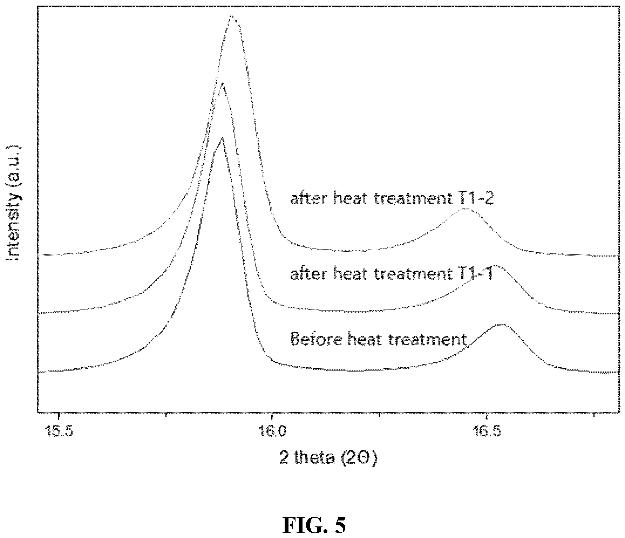

The results of XRD peak shift analysis before and after secondary sintering of the prepared positive electrode active material at each temperature are shown in Table 3 below and Figure 5.

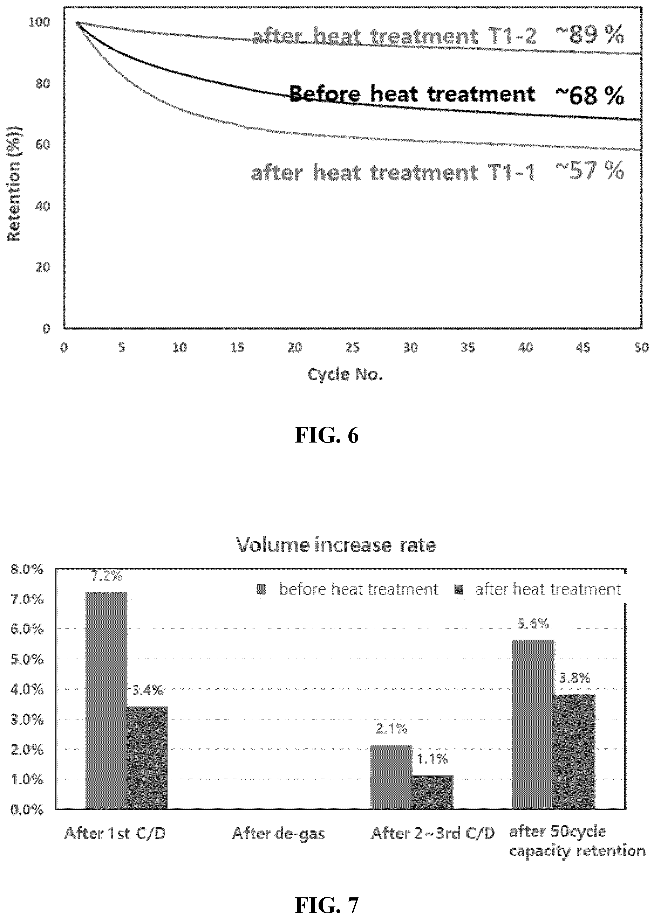

Battery lifetime characteristics before and after secondary sintering at each temperature were analyzed and are shown in FIG. 6.

### * Battery lifetime characteristics

Battery lifetime characteristics was charged/discharged 50 times under the condition of 1 C/1 C in a driving voltage range of 2.0 V to 4.6 V at 25 °C using an electrochemical analysis device (Toyo, Toscat-3100), and then the ratio of the discharge capacity at the 50th cycle to the initial capacity (cycle capacity retention rate) was measured.

**[Table 3]**

| | | Before sintering | after sintering at 500 °C | after sintering at 800 °C |
|---|---|---|---|---|
| XRD (2θ) | 002 (P2) | 15.8829 | 15.8829 | 15.9029 |
| | 003 (O3) | 16.541 | 16.5211 | 16.4812 |

Referring to Table 3 and FIGS. 5 and 6, when secondary sintering is performed at a preferred secondary sintering temperature range of 750 to 900°C, an XRD shift due to Na migration is confirmed.

On the other hand, the migration effect did not occur below the design temperature, and when the design temperature was exceeded, structural deterioration of the positive electrode active material may occur due to high-temperature sintering. In both P2 and O3-type oxides, Na that was present inside the lattice may come back to the surface and the crystal structure may collapse.

### Experimental Example 5: Gas generation analysis due to secondary sintering

The results of experiments 1) to 4) below are shown in FIG. 7 for each of a sodium secondary battery (before sintering) manufactured from the positive electrode active material prepared in Example 1 by mixing P2-type particles and O3-type particles without applying secondary sintering, and a sodium secondary battery (after sintering) manufactured from the positive electrode active material prepared by applying secondary sintering.
1) After 1st C/D: Gas generated after the first charge/discharge after cell assembly was measured.
2) After de-gas: Work was performed to remove the gas generated after the first charge/discharge.
3) After 2nd to 3rd C/D: Gas generated after charge/discharge in the formation was measured.
4) After 50cycle lifetime: After the 2nd to 3rd C/D, the volume was assumed to be 0 and the gas generated after 50 cycles was measured.

Referring to FIG. 7, it was confirmed that when the secondary sintering of the present invention is performed, the amount of gas generated may be reduced by removing residual Na compared to the case where the secondary sintering is not performed.

According to the present invention, the P2-type particles can replenish particle surface Na lost due to water washing or overall low Na content, and O3-type particles can effectively remove residual Na without structural collapse.

In addition, O3-type oxide particles have fundamentally low structural stability regardless of the control of the total Na equivalents, so when washed with water to remove residual Na, there is a problem in that all internal Na comes out and the structure cannot be maintained. However, in the present invention, residual Na in O3-type oxide particles can be effectively removed.

In addition, the present invention can improve the problem of the particle structure of O3-type particles collapsing and phase transitioning to P3-type by controlling excessive Na migration from O3-type oxide particles to P2-type oxide particles.

As described above, although the present invention has been shown and described with respect to specific embodiments, it will be apparent to those skilled in the art that the present invention can be modified and changed in various ways to the extent that it does not depart from the following claims.

## Claims

1. A positive electrode active material for a sodium secondary battery, comprising P2-type layered oxide particles and O3-type layered oxide particles,
wherein in SEM-EDS mapping analysis, an atomic ratio (S3/S2) of a surface Na content (at%) (S3) of the O3-type layered oxide particles to a surface Na content (at%) (S2) of the P2-type layered oxide particles is 0.4 to 1.6.

2. The positive electrode active material of claim 1, wherein the atomic ratio (S3/S2) of a surface Na content (at%) (S3) of the O3-type layered oxide particles to a surface Na content (at%) (S2) of the P2-type layered oxide particles is 0.65 to 1.45.

3. The positive electrode active material of claim 1 or 2, wherein in SEM-EDS mapping analysis, the surface Na content (at%) (S2) of the P2-type layered oxide particles ranges from 14.5 to 21.5 at%, and the surface Na content of the O3-type layered oxide particles (at%) (S3) ranges from 7.5 to 21.5 at%.

4. The positive electrode active material of claim 3, wherein the surface Na content (at%) (S2) of the P2-type layered oxide particles ranges from 14.5 to 21.5 at%, and the surface Na content of the O3-type layered oxide particles (at%) (S3) ranges from 14.5 to 21.5 at%.

5. The positive electrode active material of one of claims 1 to 4, wherein the P2-type layered oxide is represented by the following Chemical Formula 1, and the O3-type layered oxide is represented by the following Chemical Formula 2:
[Chemical Formula 1] Naₐ[NiₓM1_{y}Mn_{1-x-y}]O₂
in Chemical Formula 1, M1 is at least one selected from P, Sr, Ba, Ti, Zr, W, Co, Mg, Al, Cu, Zn, Ce, Hf, Ta, F, Cr, V, Si, Fe, Y, Ga, Sn, Mo, Ge, Nd, B, Nb, and Gd, and 0.44<a<0.80, 0.05≤x≤0.45, 0.05≤y≤0.15, 0.45<1-x-y≤0.9,
[Chemical Formula 2] Naₐ[NiₓM1_{y}M2_{z}Mn_{1-x-y-z}]O₂
in Chemical Formula 2, M1 is at least one selected from the group consisting of Fe and Mn, M2 is at least one selected from P, Sr, Ba, Ti, Zr, W, Co, Mg, Al, Cu, Zn, Ce, Hf, Ta, F, Cr, V, Si, Fe, Y, Ga, Sn, Mo, Ge, Nd, B, Nb, and Gd, and 0.80<a<1.1, 0.05≤x≤0.45, 0.05≤y≤0.45, 0.05≤z≤0.15, 0.05<1-x-y-z≤0.45.

6. The positive electrode active material of one of claims 1 to 5,
wherein the P2-type layered oxide has an Na equivalent weight (Na/M ratio) of 0.60 to 0.70, and
the O3-type layered oxide has an Na equivalent weight (Na/M ratio) of 0.90 to 1.05.

7. The positive electrode active material of one of claims 1 to 6, wherein the P2-type layered oxide particles and the O3-type layered oxide particles are included in a weight ratio of 8:2 to 2:8.

8. The positive electrode active material of one of claims 1 to 7, wherein the positive electrode active material does not exhibit an NiOx peak in XRD analysis.

9. The positive electrode active material of one of claims 1 to 8, wherein the positive electrode active material has a residual Na content (TTS, total sodium) of 500 to 10,000 ppm.

10. The positive electrode active material of one of claims 1 to 9, wherein the positive electrode active material comprises sintered mixed oxide particles of the P2-type layered oxide particles and the O3-type layered oxide particles.

11. A method of preparing a positive electrode active material for a sodium secondary battery, comprising:
mixing P2-type layered oxide particles and O3-type layered oxide particles, and
sintering the mixed oxide particles.

12. The method of claim 11, wherein before the sintering, the P2-type layered oxide particles and the O3-type layered oxide particles are not washed with water to remove residual Na on the surface.

13. The method of claim 11, wherein the P2-type layered oxide particles and the O3-type layered oxide particles are mixed in a weight ratio of 8:2 to 2:8; and/or
wherein the sintering is performed at a temperature of 400 to 1,000 °C for 3 to 16 h.

14. A positive electrode for a sodium secondary battery comprising the positive electrode active material of one of claims 1 to 10.

15. A sodium secondary battery comprising the positive electrode of claim 14 and a negative electrode.
